# EUROPEAN PATENT APPLICATION

(11) **EP 1 315 059 A2**
(43) Date of publication of application: **28.05.2003**
(21) Application number: 02000311.7
(22) Date of filing: 03.01.2002
(51) Int. Cl.: G05D 7/01

(54) **FLow control valve**

(30) Priority: 31.10.2001 GB 0126052
(71) Applicant: Fluid Controls (UK) Limited, Maulden, Beds MK45 2AA (GB)
(72) Inventor: May, John Henry, Flitwick, Beds. MK45 1DX (GB)
(74) Representative: Raynor, Simon Mark

(57) **Abstract**

A flow control valve includes a body member (1) having a bore (10) defining a fluid flow passageway. A resiliently-biased flow control member (2) is mounted in said passageway for movement relative to the body member (1) in response to the differential fluid pressure across the valve. The flow control member (2) includes a flow control port (28) that defines with a probe element (44) an annular throttling orifice (46). The probe element (44) is tapered such that the size of the annular orifice (46) depends on the position of the flow control member relative to the probe element.

## Description

The present invention relates to a flow control valve for delivering a substantially constant flow rate of fluid irrespective of the differential pressure across the valve.

For convenience, the invention will be described with particular reference to an application in a re-circulating hot water radiator central heating system, but it will be appreciated that its uses are not so limited and, indeed, it has wide applicability in fluid systems generally.

It is conventional practice to use calibration valves to balance the distribution of flows in large central heating systems such as in a multi-storey office block. A primary pipe loop recirculates pumped heated water from the boiler usually located in the basement to the uppermost floor. At each floor a secondary piping loop is directly connected to the primary loop and feeds a series of radiators connected between the supply and return pipes of the secondary loop. Tertiary pipe loops may also be connected to secondary loops, and so forth. Clearly, the differential pressure across any pipe loop is dependent upon the height of the entry and exit points from the boiler and the individual pipe run friction losses. In addition to the difficulties caused by this, the flows required to meet the heating requirements on each floor are not necessarily the same and indeed may even change on a daily basis as a function of individual requirements (turning radiators on and off) or occupancy.

To obtain the desired distribution of flows necessitates the use of balancing valves, which are usually fitted between the last radiator and the connection from the return pipe of the secondary loop to the primary loop, or the tertiary pipe loop to the secondary and so forth. To set the design flow manually the degree of throttling of any particular balancing valve necessitates that a flow meter is also installed in the pipe loop. The flow meter is usually but not exclusively connected by way of differential pressure tappings across the balancing valve. However, adjusting the setting of any one valve affects the differential pressure across all the other valves, thus manual adjustment is both time-consuming and inaccurate. Furthermore, if a change occurs in either the head flow characteristic of the pump or the individual friction resistance of any of the individual pipes, this too may alter the optimal setting of one or all of the balance valves.

An alternative and preferable approach is to use constant flow valves. A common arrangement uses a variable orifice set against a spring so that the differential pressure determines the degree of occlusion across the variable orifice. In one such variable orifice type valve, the variable orifice is formed in the side wall of a spring-biassed piston, which moves relative to a sleeve according to the differential pressure. The orifice area is divided into a front facing fixed orifice and one or more side orifices such that the combined variable discharge area yields the design flow over the required range of differential pressures. This yields both primary and secondary flow paths. When the differential pressure is low, a large discharge area is provided and when the differential pressure is high, the spring is compressed and the sleeve partially occludes the orifice, thereby maintaining a substantially constant flow rate. The piston and the spring may be provided in the form of a cartridge that can be removed from the main valve body and replaced with another cartridge providing a different flow rate and/or different pressure range.

A number of problems exist with this arrangement: first, for low and very low flows the Reynolds numbers are in the lamina or transitional regime of flows, which can cause a lack of repeatability due to the variability in the profile of the approach flow. Second, the variable occlusions machined in the side walls to provide the required constant flow rates necessitate very accurate machining. In conventional form this approach also necessitates that an individual and precise geometry of the variable occlusions is required for any given flow. Owing to the existence of one or more flow paths through the piston orifices, the division of flow between the paths is not necessarily repeatable and therefore this arrangement tends to lead to hysteresis between rising and falling secondary pipe resistances. This can result in the flowrate tolerance being outside the industry expected limits of ± 5%.

Another flow control valve described in US 3,464,439 (Budzich) has a resiliently-biassed piston mounted for sliding movement in a cylinder. The piston has an inlet orifice in its end face and a number of outlet throttling openings in its side wall. The throttling openings are partially occluded by the walls of the cylinder. The position of the piston depends on the differential pressure across the valve, the degree of occlusion of the throttling openings increasing as the differential pressure increases. The inlet orifice is also partially occluded by a tapered probe that extends through the orifice, in order to compensate for the spring rate of the biassing spring. However, throttling to reduce flow rates takes place primarily at the throttling openings.

The flow path through the valve is complicated, including a number of changes of direction. This leads to unpredictable and turbulent flow patterns and poor flow control, particularly at low differential pressures. The device also relies on the flow of fluid through two sets of shaped variable apertures, which can cause instability. The device is mechanically complex and manufacturing it requires complicated and difficult machining operations.

WO 00/03597 (May) describes an adjustable flow control valve including a resiliently-biassed piston and an adjustable throttle plate that is positioned adjacent one edge of the piston. The distance between the throttle plate and the piston can be adjusted to adjust the flow rate through the valve. The valve is mechanically complex and requires the use of complicated manufacturing processes.

It is an object of the present invention to provide a flow control valve that mitigates at least some of the disadvantages associated with the previous flow control valves, as described above.

According to the present invention there is provided a flow control valve including a body member having a bore defining a fluid flow passageway with an inlet port at a first end thereof and an outlet port at a second end thereof, a resiliently-biassed flow control member that includes a flow control port and is mounted in said passageway for movement relative to the body member in response to the differential fluid pressure across the valve, and a throttling member including a tapered probe element that defines with the flow control port an annular throttling orifice, the valve being constructed and arranged such that the size of the annular orifice depends on the position of the flow control member relative to the throttling member; wherein the fluid flow passageway is substantially rectilinear.

The valve provides a substantially constant fluid flow rate across a wide range of differential pressures, including very low differential pressures when the flow is in the lamina or transitional regime. The valve is also mechanically simple, it is easy to manufacture and reliable in operation.

The flow rate of fluid through the valve is of course substantially constant only for variations in the differential pressure that lie within a predetermined range: i.e. between upper and lower operational limits, for example from 10kPa to 250kPa, or from 30kPa to 450kPa, depending on the chosen design characteristics of the valve. The statement that the flow rate is "substantially constant" implies that the flow rate is regulated to within a tolerance of, for example, ±5%.

The valve does not rely upon the use of one or more precisely machined geometrically complex shaped side orifices and can therefore be manufactured more cheaply than most existing constant flow valves. The flow of fluid through the valve is substantially linear and parallel to the longitudinal axis, which avoids turbulent flow patterns and provides good flow control, particularly at low differential pressures. Also, as the valve only requires a single orifice, instability and the hysteresis effects caused by cascading flows are avoided.

Advantageously, throttling is provided wholly or primarily at the annular throttling orifice.

According to a further aspect of the invention there is provided a flow control valve including a body member having a bore defining a fluid flow passageway with an inlet port at a first end thereof and an outlet port at a second end thereof, a resiliently-biassed flow control member that includes a flow control port and is mounted in said passageway for movement relative to the body member in response to the differential fluid pressure across the valve, and a throttling member including a tapered probe element that defines with the flow control port an annular throttling orifice, the valve being constructed and arranged such that the size of the annular orifice depends on the position of the flow control member relative to the throttling member; wherein throttling is provided wholly or primarily at the annular throttling orifice.

Throttling wholly or primarily at the annular throttling orifice avoids cascading flows and the instabilities caused by the interaction of separate throttling orifices.

The inlet and outlet ports may be constructed and arranged such that the flow of fluid through the ports is substantially parallel to the longitudinal axis of the fluid flow passageway. This helps to ensure that the flow of fluid through the valve is smooth and non-turbulent. The arrangement also allows the device to be mounted in an in-line housing.

The flow control member may include an inlet passageway that is constructed and arranged such that the flow of fluid through the inlet passageway is substantially parallel to the longitudinal axis of the fluid flow passageway. The inlet passageway may be defined by a circumferential wall. The flow control port may be provided in a dividing wall that is located towards the downstream end of the inlet passageway. The inlet passageway helps to condition the flow of fluid upstream of the throttling orifice.

The flow control member may include an outlet passageway that is constructed and arranged such that the flow of fluid through the outlet passageway is substantially parallel to the longitudinal axis of the fluid flow passageway. The outlet passageway may be defined by a circumferential wall.

The probe element may have a domed end, to reduce separation as the fluid flows past the probe element.

The flow control valve may include means for adjusting the axial position of the probe element, and may further include means for adjusting the resilient biassing force applied to the flow control member. Advantageously, the flow control member is biassed by means of a compression spring and the means for adjusting the resilient biassing force comprises means for adjusting the compression of the spring.

The flow control valve may include a housing in which the body member can be mounted, wherein said housing is capable of accommodating interchangeable flow control valve cartridges having different fluid flow capacities.

An embodiment ofthe invention will now be described, by way of example, with reference to the accompanying drawings, in which:
Figure 1 is a partially sectional exploded side view of a flow control valve;
Figures 2, 3 and 4 are sectional side views showing the valve in a fully open condition, an intermediate open condition and fully closed condition;
Figure 5 is a schematic side section illustrating the flow of fluid through the valve;
Figure 6 is illustrates diagrammatically the factors affecting flow of fluid past the probe element, and
Figure 7 is a flow diagram illustrating the steps of an iterative process for calculating the profile of the probe element.

The constant flow valve is constructed in the form of a cartridge that, in use, is mounted in a housing (not shown). The valve includes a main body member 1, a flow control member 2, a compression spring 3, a bottom ring 4 and a throttling member 5. The dimensions of these components may vary, to provide different predetermined fluid flow rates, and the housing may be capable of accommodating a range of different cartridges, according to the required flow rate.

The main body 1 is substantially cylindrical having an inlet end 6 and a outlet end 8. An axial bore that defines a substantially rectilinear fluid flow passageway 10 extends longitudinally through the main body. An inwardly-extending flange 12 is provided at the inlet end of the passageway. The outlet end of the passageway includes a screw thread 14 that is cut into the cylindrical wall of the bore.

The external surface 16 of the body member is substantially cylindrical, in the example having a diameter of approximately 20.5mm. A reduced diameter portion 17 having a diameter of approximately 20mm is provided towards the inlet end 6, and a groove 18 having a diameter of approximately 19mm extends circumferentially around the middle of the external cylindrical surface 16. The reduced diameter portion 17 and the groove 18 are used for mounting the body member 1 in a housing, the groove 18 accommodating an O-ring 20 for sealing the valve against leaks.

The flow control member 2 is substantially cylindrical and is mounted for sliding movement in the fluid flow passageway 10. It includes an upper wall portion 22 having an outside diameter that is fractionally less than the internal diameter of the bore 10 to allow the flow control member 2 to slide longitudinally relative to the main body member 1, and a lower wall portion 24 that has a slightly smaller diameter and extends loosely through the coils of the spring 3. A dividing wall 26 extends inwards from the junction of the upper and lower wall portions. A flow control port 28 is provided in the centre of the dividing wall, through which fluid can flow from the inlet end to the outlet end of the valve. Upwards movement of the flow control member 2 is limited by the upper wall portion 22 engaging the flange 12 in the body member 1, whereas downwards movement is opposed by the compressed spring 3 and ultimately limited by engagement with the bottom ring 4.

The bottom ring 4 includes an annular flange 30 having an external screw thread 22 that engages the internal screw thread 14 in the lower portion of the bore, and an inner collar 34 provided with an internal screw thread 36 that extends axially into the bore. The flange 30 provides a seat for the lower end of the spring 3 and is provided with a plurality of fluid flow passageways 38 that extend axially through the flange, allowing fluid to flow out of the outlet end of the valve.

The ring 4 serves as a mount for the throttling member 5, which has a circular cross-section and includes an externally-threaded lower end 40 that engages the internal screw thread 36 in the ring 4, a central portion 42 of larger diameter that is a close fit in the collar 34, and tapered probe element 44 that extends along the axis of the valve towards the inlet end of the valve. The probe element 44 extends through the flow control port 28 in the flow control member 2 and defines with the flow control port an annular throttling orifice 46, the cross-sectional area of which depends on the position of the flow control member relative to the throttling member. The size of the throttling orifice 46 is therefore determined by the position of the throttling member 2 and the shape of the probe element 44, which is defined by a set of equations, as set out below. The end 48 of the probe element 44 is domed to avoid separation in the fluid as it flows past the end of the probe element.

The throttling member 5 includes a slot 50 in its lower end for receiving a screwdriver, which allows the axial position of the probe element to be adjusted. In addition, the ring 4 can be rotated to adjust the compression of the spring 3. Adjusting these two components allows the flow rate of fluid through the valve to be finely controlled.

In use, fluid flows through the valve from the inlet end 6 of the passageway to the outlet end 8, passing first through the upper part of the flow control member defined by the upper cylindrical wall 22, which smooths and conditions the flow. It then flows through the annular throttling orifice 46 between the probe element 44 and the flow control port 28 into the lower portion of the flow control member defined by the lower wall portion 24, which again smooths and conditions the flow before it exits from the outlet end of the valve through the outlet ports 38 in the ring 4.

As the fluid flows through the throttling orifice 46, there is a sudden drop in fluid flow speed, leading to a pressure drop across the orifice. This pressure drop is inversely proportional to the cross-sectional area of the orifice, and therefore increases with the differential pressure across the valve, as the flow control member 2 is depressed.

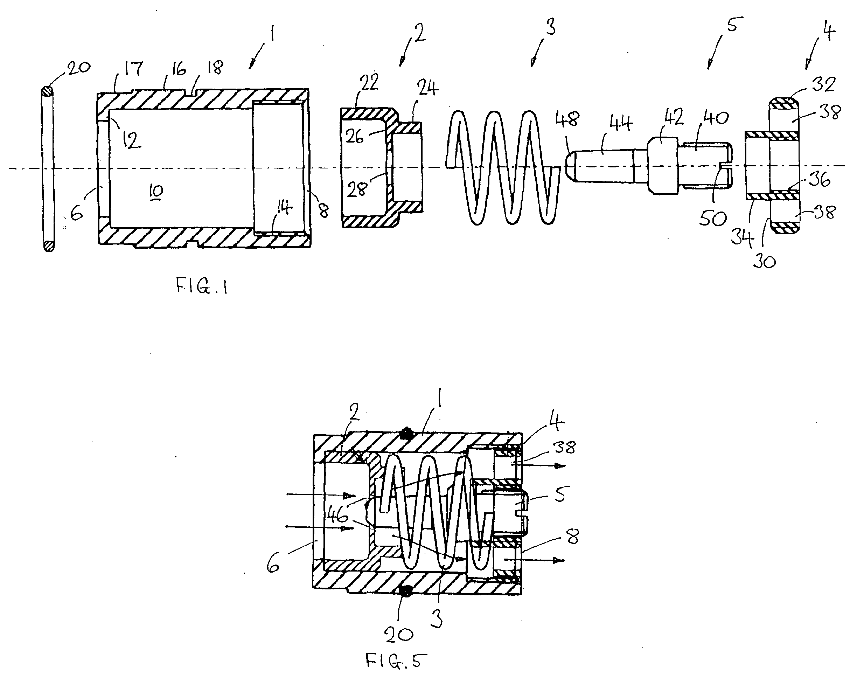

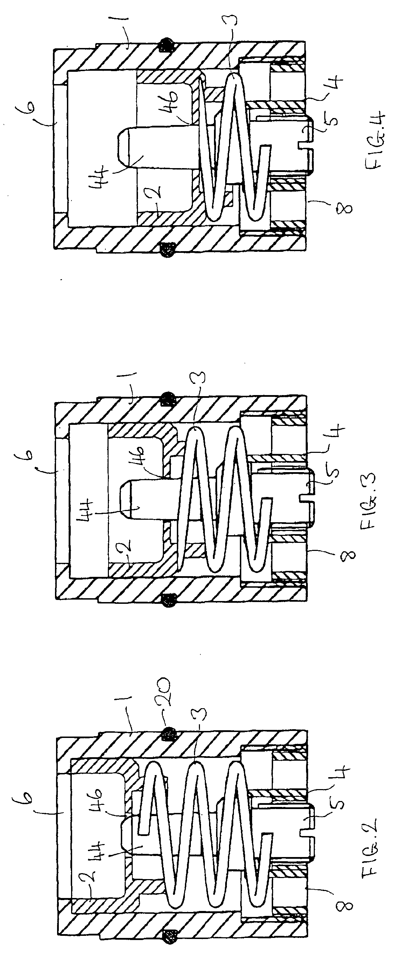

At very low differential pressures the flow control member 2 is biassed upwards by the compressed spring 3 to the fully open position shown in figure 2, in which the upper wall portion 22 of the flow control member engages the flange 12. In this condition the cross-sectional area of the annular orifice 46 is a maximum and the valve is fully open. The pressure difference across the annular orifice is then small.

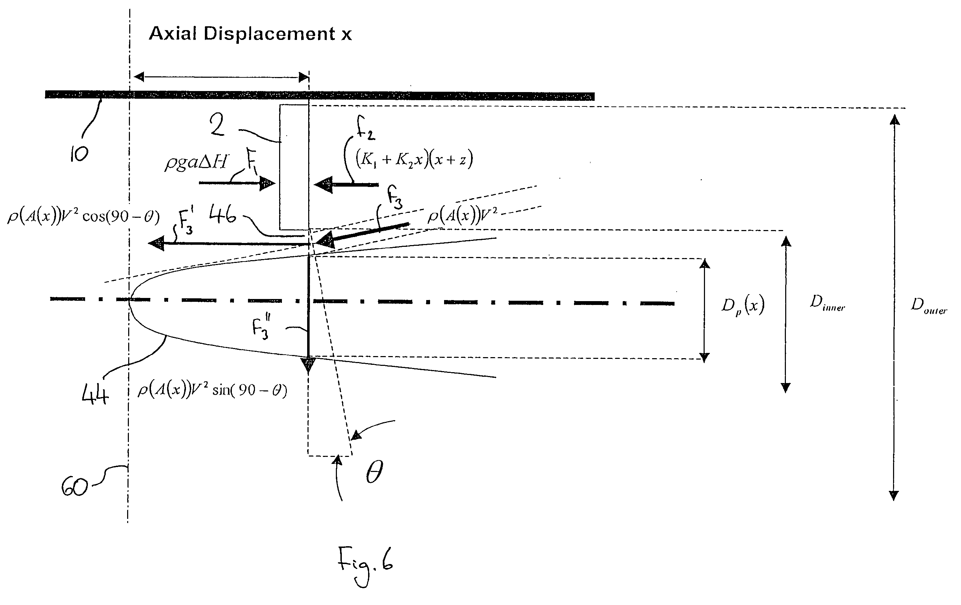

When the differential pressure across the valve increases, the flow control member 2 is depressed to an intermediate open position as shown in figure 3, thereby compressing the spring 3. The cross-sectional area of the annular throttling orifice 46 is then reduced, increasing the pressure difference across the annular orifice.

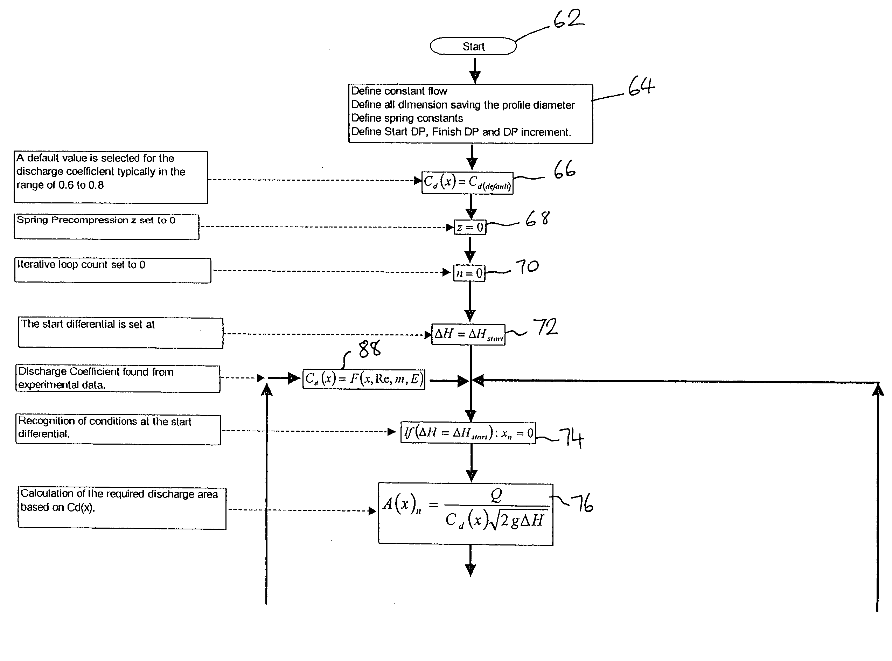

With further increases in the differential pressure, the flow control member 2 is depressed further, until it reaches a fully closed position, as shown in figure 4. The cross-sectional area of the annular orifice 46 is. further reduced, increasing still further the pressure difference across the orifice. In this way, the flow rate of fluid through the valve is maintained at a substantially constant value, regardless of changes in the differential pressure.

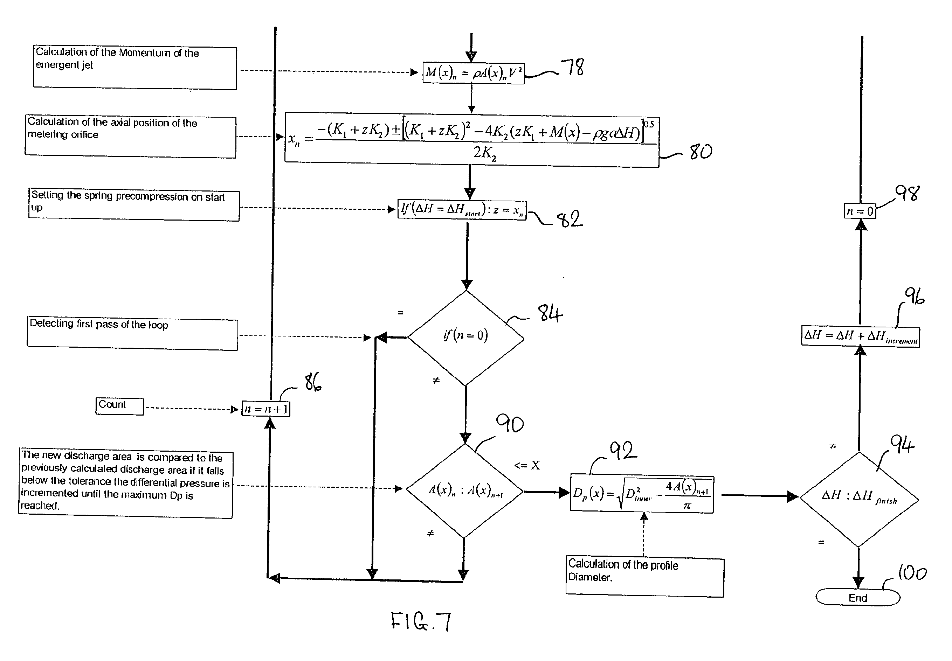

The flow of fluid through the valve is illustrated in figure 5. It will be seen that the flow of fluid through the valve is smooth and substantially parallel to the longitudinal axis of the valve, avoiding any abrupt changes of direction. As a result, operation of the valve is predictable and stable.

The valve reacts to changes in the differential pressure by opening or closing, to maintain a substantially constant flow rate of fluid through the valve, the flow being controlled by the pressure drop across the annular orifice 46. The valve has been found to provide a very stable flow rate across a wide range of differential pressures, including very low differential pressures.

For correct operation of the valve, it is essential that the profile of the probe element is correct. The profile is defined in terms of the diameter *D*_{*p*}*(x)* of the probe element at an orifice displacement *x*, which is calculated by means of an iterative process that will now be described with reference to Figs. 6 and 7 of the drawings. The quantities and equations used in the process are set out in the chart of nomenclature attached hereto.

Fig. 6 illustrates diagrammatically the probe element 44, one side of the fluid flow passageway 10 and part ofthe flow control member 2, which with the probe element defines the annular throttling orifice 46. The flow control member 2 is shown at a displacement *x* from its rest position, which is marked by a chain line 60. As mentioned above, the profile of the probe element is defined in terms of the diameter *D*_{*p*}*(x)* of that element at a displacement *x*, that position being defined by the downstream edge of the flow control member 2.

The forces acting on the flow control member 2 at equilibrium are balanced and include a first force term *F*_{*1*} that results from the differential pressure and is equal to *pgaΔH*, a second force term *F*_{*2*} that results from the compressed spring and is equal to *(K*_{*1*} + *K*_{*2*}*x)(x* + *z)*, and a third force term *F*_{*3*} that results from the rate of change of momentum of the fluid passing through the throttling aperture. The third force term *F*_{*3*} is equal to *ρ(A(x))V*^{*2*} and may be resolved into an axial component *F*_{*3*}*'* that is equal to *ρ(A(x))V*^{*2*} *cos(90-θ)* and a radial component *F*_{*3*}" that is equal to *ρ(A(x))V*^{*2*} *sin(90-θ)*, where ρ is the density of the fluid and θ is the angle between a line normal to the surface of the probe element at the throttling aperture and the axis of the fluid flow passageway.

If the angle θ is large, the radial component of the momentum term becomes very small and the size of the throttling aperture approximates to the difference in area of the flow control port 28 and the cross-sectional area of the probe element at the displacement *x*. This approximation is used in the equations set out in the flow diagram shown in Fig. 7. At smaller values of θ, the radial component of momentum becomes more significant and the trigonometric functions set out above have to be taken into account, with appropriate revisions being made to the flow diagram.

The iterative process comprises a number of steps, which are set in the form of a flow diagram in Fig. 7. The process includes a start step 62, followed by a definition step 64 in which the following values are defined: the required constant flow rate, all essential dimensions of the valve except the profile diameter, the spring constants, the start and finish differential pressures (DP) and the DP increment. In the next step 66 a default value, typically in the range of 0.6 to 0.8, is selected for the discharge coefficient *C*_{*d*}*(x)*. Then, the spring precompression z set to 0 (step 68), the iterative loop count is set to zero (step 70) and the differential head *ΔH* is set at a start value *ΔH*_{*start*} (step 72).

The process then comprises a loop including the following steps, which are repeated until completion of the process. The condition set out in step 74 is used to recognise the conditions at the start differential. The required discharge area *A(x)n* is calculated in step 76, based on the discharge coefficient *C*_{*d*}*(x)*. The momentum *M(x)*_{*n*} of the emergent jet is calculated in step 78. In step 80, the axial position *x*_{*n*} of the metering orifice is calculated. In step 82, the spring precompression z at start up is set.

The *n*^{*th*} pass of the loop is detected at step 84. If *n=0*, indicating the first pass, *n* is incremented in step 86 and the discharge coefficient *C*_{*d*}*(x)* is found from experimental data in step 88. The loop then returns to step 74 and repeats.

If *n ≠0*, indicating a subsequent pass of the loop, the new discharge area is compared in step 90 to the previously calculated discharge area and, if it falls below a tolerance value, the differential pressure is incremented and the diameter of the probe element is calculated (step 92). This process is repeated until the maximum differential pressure is reached.

The differential head Δ*H* is compared to a finish value (step 94) and if it does not equal that value, the differential head is incremented (step 96). The step count *n* is reset to zero (step 98) and the process is repeated. When the differential head Δ*H* equals the finish value, the process ends (step 100).

The process described above thus enables the correct profile of the probe element to be calculated for any given value, to provide the required constant flow rate for a given range of differential pressures.

Various modifications of the invention are possible, some examples of which will now be described.

The components of the valve may be manufactured in different shapes and sizes, to provide different flow rates and ranges of operating pressure. The external dimensions of the body member may however be kept constant (or restricted to a limited range of sizes) so that the valves may be fitted interchangeably into a small number of universal housings.

The strength of the spring may be varied to provide different designed flow rates. The spring may be replaced by another resilient biasing member, for example an elastomeric material or a cylinder of compressed gas. Although the valve is preferably made of stainless steel, it may also be made of other materials including plastics, ceramics and composites. Different methods of manufacture may also be employed, including for example investment casting and die casting.

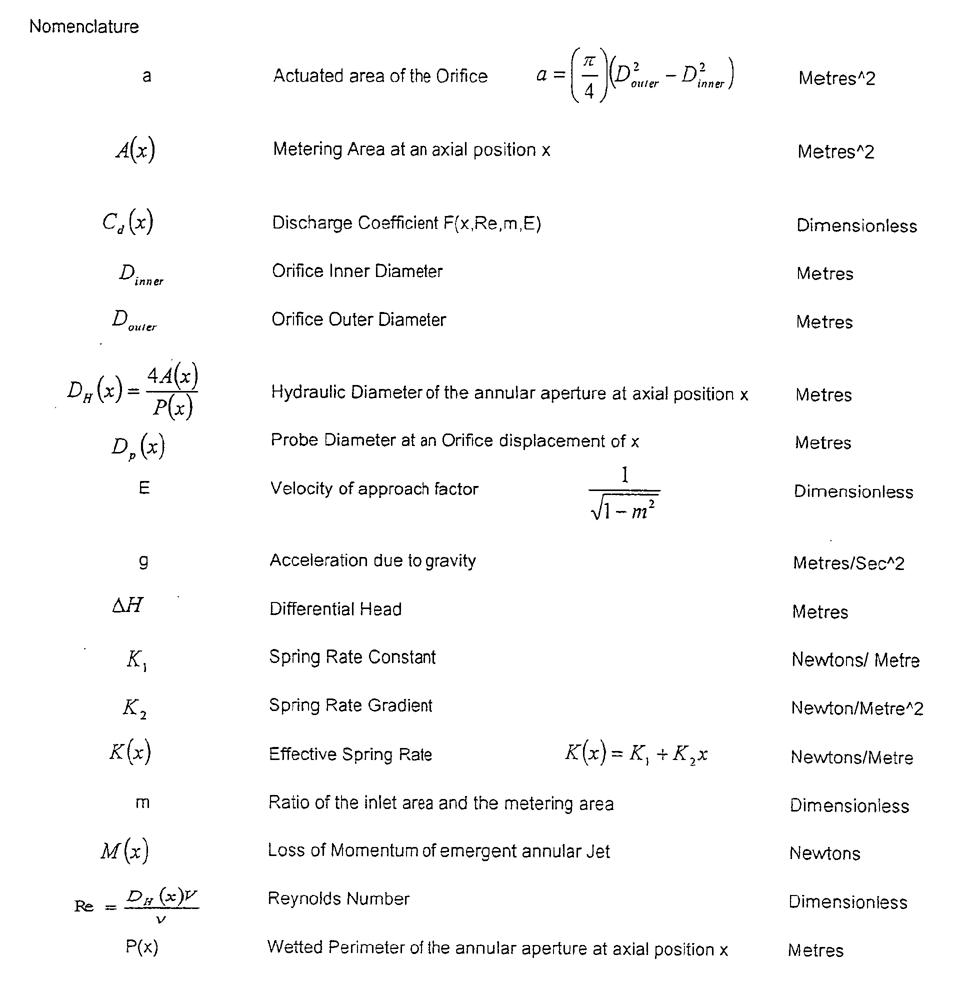

## Claims

1. A flow control valve including a body member having a bore defining a fluid flow passageway with an inlet port at a first end thereof and an outlet port at a second end thereof, a resiliently-biassed flow control member that includes a flow control port and is mounted in said passageway for movement relative to the body member in response to the differential fluid pressure across the valve, and a throttling member including a tapered probe element that defines with the flow control port an annular throttling orifice, the valve being constructed and arranged such that the size of the annular orifice depends on the position of the flow control member relative to the throttling member; wherein the fluid flow passageway is substantially rectilinear.

2. A flow control valve according to claim 1, wherein throttling is provided wholly or primarily at the annular throttling orifice.

3. A flow control valve including a body member having a bore defining a fluid flow passageway with an inlet port at a first end thereof and an outlet port at a second end thereof, a resiliently-biassed flow control member that includes a flow control port and is mounted in said passageway for movement relative to the body member in response to the differential fluid pressure across the valve, and a throttling member including a tapered probe element that defines with the flow control port an annular throttling orifice, the valve being constructed and arranged such that the size of the annular orifice depends on the position of the flow control member relative to the throttling member; wherein throttling is provided wholly or primarily at the annular throttling orifice.

4. A flow control valve according to any one of the preceding claims, wherein the inlet and outlet ports are constructed and arranged such that the flow of fluid through the ports is substantially parallel to the longitudinal axis of the fluid flow passageway.

5. A flow control valve according to any one of the preceding claims, wherein the flow control member includes an inlet passageway that is constructed and arranged such that the flow of fluid through the inlet passageway is substantially parallel to the longitudinal axis of the fluid flow passageway.

6. A flow control valve according to claim 5, wherein the inlet passageway is defined by a circumferential wall.

7. A flow control valve according to claim 5 or claim 6, wherein the flow control port is provided in a dividing wall that is located towards the downstream end of the inlet passageway.

8. A flow control valve according to any one of the preceding claims, wherein the flow control member includes an outlet passageway that is constructed and arranged such that the flow of fluid through the outlet passageway is substantially parallel to the longitudinal axis of the fluid flow passageway.

9. A flow control valve according to claim 8, wherein the outlet passageway is defined by a circumferential wall.

10. A flow control valve according to any one of the preceding claims, wherein the probe element has a domed end.

11. A flow control valve according to any one of the preceding claims, including means for adjusting the axial position of the probe element.

12. A flow control valve according to any one of the preceding claims, including means for adjusting the resilient biassing force applied to the flow control member.

13. A flow control valve according to claim 12, wherein the flow control member is biassed by means of a compression spring and the means for adjusting the resilient biassing force comprises means for adjusting the compression of the spring.

14. A flow control valve according to any one of the preceding claims, including a housing in which the body member can be mounted, wherein said housing is capable of accommodating interchangeable flow control valve cartridges having different fluid flow capacities.
